# FASCICULE DE BREVET EUROPEEN

(11) **EP 0 885 463 B1**
(45) Date de publication et mention de la délivrance du brevet: **03.05.2000**
(21) Numéro de dépôt: 97904493.0
(22) Date de dépôt: 05.02.1997
(51) Int. Cl.: H01M 2/16, H01M 10/28

(54) **ACCUMULATEUR ALCALIN A ELECTRODE NEGATIVE DE ZINC**
ALKALISCHER AKKUMULATOR MIT NEGATIVER ZINK ELEKTRODE
ALKALINE STORAGE BATTERY WITH A NEGATIVE ZINC ELECTRODE

(30) Priorité: 08.03.1996 FR 9602941
(43) Date de publication de la demande: 23.12.1998
(73) Titulaire: LABORATOIRES SORAPEC, 94120 Fontenay-sous-Bois (FR)
(72) Inventeur: BRONOEL, Guy, F-78000 Versailles (FR); TASSIN, Noelle, F-94120 Fontenay-sous-Bois (FR); MILLOT, Alain, F-77190 Dammarie-les-Lys (FR)
(74) Mandataire: Moinas, Michel
(86) Numéro de dépôt international: FR9700228
(87) Numéro de publication internationale: WO9733325

(56) Documents cités:
- EP-A- 0 517 921
- EP-A- 0 584 987
- WO-A-85/04287
- WO-A-92/22936
- DE-A- 3 907 741
- FR-A- 1 214 394
- FR-A- 1 230 664
- FR-A- 2 708 382
- US-A- 4 592 973
- US-A- 4 789 609
- US-A- 5 143 799
- PATENT ABSTRACTS OF JAPAN vol. 009, no. 274 (E-354), 31 Octobre 1985 & JP 60 117568 A (SHINKOUBE DENKI KK), 25 Juin 1985,
- PATENT ABSTRACTS OF JAPAN vol. 007, no. 288 (E-218), 22 Décembre 1983 & JP 58 165243 A (NIHON DENCHI KK), 30 Septembre 1983,
- DATABASE WPI Derwent Publications Ltd., London, GB; AN 77-34950Y XP002016609 & JP 50 102 832 A (MATSUSHITA)

## Description

La présente invention concerne un accumulateur alcalin à électrode négative de zinc, comportant une membrane séparant deux électrolytes de volume et de composition différents, notamment une membrane échangeuse d'ions.

La description qui suit est faite pour un accumulateur Ni-Zn mais peut aussi bien se rapporter à un accumulateur Ag-Zn, le Ni étant remplacé par de l'Ag, ou à un accumulateur Air-Zinc, etc...

De nombreux travaux ont été entrepris depuis les vingt dernières années en vue de la mise au point d'un accumulateur Ni-Zn présentant une longévité en cyclage satisfaisante.

Naguère, il était admis que la mauvaise tenue en cyclage de l'accumulateur Ni-Zn était due à des courts-circuits provoqués par les dendrites de zinc se formant à la charge.

Or, les dendrites ont d'autant plus tendance à se former que la concentration en zincates dans l'électrolyte en contact avec l'électrode négative est plus grande.

Les remèdes les plus efficaces consistent donc à diminuer la solubilité du zinc dans les solutions alcalines, soit en en diminuant la basicité, soit en incorporant dans la masse active de l'électrode négative des additifs tels que CaO afin de former des complexes insolubles avec les formes ionisées du zinc.

Enfin, il a été également signalé l'addition, dans l'électrolyte, d'ions métalliques tels que Pb⁴⁺ ou de composés capables d'agir sur la morphologie des dépôts de zinc.

Par la combinaison de ces différents moyens, il a été signalé par CAIRNS (J. Electrochem. Soc., 1993, 140, 2, pp 289-293) que le problème des dendrites était résolu mais qu'en revanche la longévité en cyclage, de l'ordre de 500 cycles, bien que considérablement augmentée par rapport aux meilleures réalisations du passé (200 cycles), était limitée par la déficience des électrodes positives de nickel.

Des travaux effectués par la Demanderesse ont conduit à la même conclusion que CAIRNS.

La présente invention a pour but de pallier notamment les inconvénients précités.

A cet effet, l'invention a pour objet un accumulateur alcalin, comportant au moins une électrode positive et une électrode négative de zinc en contact avec un électrolyte via au moins un séparateur imprégné d'électrolyte, serrées respectivement contre deux écrans bipolaires maintenus par un cadre d'étanchement.

Selon l'invention, l'électrode positive est en contact avec un premier électrolyte de volume et de composition déterminés via au moins un premier séparateur, en ce que l'électrode négative est en contact avec un deuxième électrolyte de volume et de composition déterminés différents du premier électrolyte via au moins un deuxième séparateur. Les premier et deuxième électrolytes sont séparés par une membrane constituant un filtre vis-à-vis des zincates et éventuellement des aluminates, notamment une membrane à conduction anionique, définissant des premier et deuxième compartiments.

Selon une caractéristique de la présente invention l'électrolyte en contact avec l'électrode négative est essentiellement contenu dans la porosité de l'électrode négative et le deuxième séparateur retenant un volume d'électrolyte compris entre 2 et 3 cm³ par dm² de surface frontale.

L'électrolyte en contact avec l'électrode négative est constitué par exemple d'une solution aqueuse de KOH de concentration initiale comprise entre 4 et 8 M dans laquelle a été dissous entre 70 et 100 g d'aluminium, ou de concentration comprise entre 3 et 4 M.

Cette solution de KOH de concentration comprise entre 3 et 4 M peut comprendre en outre un complexant du zinc, par exemple un lignosulfonate ou des stanates en concentration comprise entre 0,01 et 0,1 M.

Selon une caractéristique, l'électrode positive est une électrode de Ni ou d'Ag.

Selon cette caractéristique, l'électrolyte en contact avec l'électrode positive est essentiellement contenu dans la porosité de l'électrode positive et le premier séparateur retenant un volume d'électrolyte compris entre 3 et 8 cm³ par dm² de surface apparente.

L'électrolyte en contact avec l'électrode positive est par exemple constitué par une solution de KOH de concentration comprise entre 4 et 8 M, et peut comprendre en outre 1 M de LiOH.

La membrane a une conduction anionique donnée par exemple pour au moins 90 % du courant la traversant par des anions OH-.

Elle est par exemple à base de polyoxyéthylène ou de polyoxyméthylène modifié par des groupements échangeurs de type ammonium quaternaire.

Selon une caractéristique, la membrane est munie, dans une partie libre, d'au moins un dispositif permettant le passage des gaz dégagés par les électrodes entre les premier et deuxième compartiments.

Selon une autre caractéristique, l'accumulateur comporte des première et deuxième réserves d'électrolyte respectivement dans les fonds des premier et deuxième compartiments ; l'accumulateur étant dans une position d'utilisation verticale.

Enfin, l'électrode positive peut être également une électrode poreuse à gaz, alimentée par de l'oxygène ou de l'air.

D'autres caractéristiques et avantages de la présente invention apparaîtront plus clairement à la lecture de la description qui suit faite en référence aux figures annexées qui représentent respectivement :
- la figure 1, une vue en coupe transversale partielle d'un module caractéristique d'un empilement d'électrodes bipolaires d'un accumulateur selon l'invention,
- la figure 2, un premier mode de réalisation d'un moyen de passage des gaz entre deux compartiments d'un accumulateur selon l'invention, renfermant respectivement des électrolytes différents, et
- la figure 3, un deuxième mode de réalisation d'un moyen de passage des gaz entre deux compartiments d'un accumulateur selon l'invention, renfermant respectivement des électrolytes différents.

Sur ces figures, les éléments homologues sont désignés par les mêmes repères.

Un avantage de la présente invention est d'améliorer le comportement de l'électrode positive de nickel lors de son cyclage.

La composition de l'électrode de zinc reprend une formulation déjà bien connue.

La masse active est constituée d'une matière active ZnO, de Ca(OH)₂, d'un additif limitant l'auto-décharge du zinc ou à la charge le dégagement d'hydrogène, tel que CdO, SnO₂, PbO₂, des liants de fibrilisation de la pâte (tels que PTFE, abréviation pour polytétrafluoréthylène) et de gélification partielle (carboxyméthylcellulose).

La masse active est empâtée sur un collecteur du type mousse de nickel ou de cuivre préalablement zinguée ou cadmiée ou plombée, environ un tiers de la masse active étant imprégné dans cette mousse, les deux autres tiers étant en surface.

Il est avantageux de recourir, pour la collecte des charges, à un drainage frontal et à réaliser la recombinaison de l'oxygène sur l'électrode négative par la face de l'électrode en contact avec le séparateur, l'ensemble s'intégrant dans une architecture bipolaire.

La présente invention utilise deux électrolytes distincts, l'un au contact de l'électrode positive, l'autre de l'électrode négative ; leur séparation étant assurée par une membrane, notamment une membrane échangeuse d'ions.

Pour ce qui est de l'électrolyte en contact avec l'électrode négative, son volume peut être avantageusement faible et plus précisément légèrement supérieur au volume d'électrolyte nécessaire au bon mouillage de toute la porosité de l'électrode négative.

Ainsi, pour une électrode dont l'épaisseur est de l'ordre de 1 mm, on observe généralement que le volume nécessaire à son mouillage est voisin de 5 cm³ par dm² d'électrode.

Afin d'éviter des phénomènes gênants d'assèchement de l'électrode négative, on peut augmenter ce volume par une réserve supplémentaire d'électrolyte de 2 à 3 cm³ par dm² de surface active, correspondant au mouillage d'un séparateur fibreux, par exemple un séparateur commercialisé sous la marque enregistrée VILEDON FS 2119 par la société Carl FREUDENBERG. Son épaisseur après montage (donc compression) est de l'ordre de 0,15 mm.

Dans le cas de l'emploi du séparateur donné en exemple, la réserve d'électrolyte est obtenue par l'empilement d'une ou deux couches dudit séparateur.

Dans le cas de l'emploi de deux couches de séparateurs, pour un volume d'électrolyte de l'ordre de 7 cm³ par dm² d'une électrode dont la capacité effective est voisine de 5 Ah/dm², la quantité de zinc solubilisé étant de l'ordre de 6 g, on peut voir que la majeure partie de Zn²⁺ est sous la forme d'oxyde ou d'hydroxyde et non de zincates.

Toutefois, même dans ce volume faible d'électrolyte, la concentration en zincates peut devenir élevée pour un électrolyte très alcalin tel qu'une solution de KOH de concentration 6 à 8 M.

Afin de réduire cette solubilité, il est dissous dans une solution de 70 à 100 g d'aluminium, qui est donc solubilisé sous la forme d'aluminates. On constate que cet ajout limite fortement la solubilité du zinc sous la forme de zincates.

Un autre moyen selon l'invention pour diminuer la solubilité du zinc, consiste à utiliser une solution de KOH moins concentrée, par exemple comprise entre 3 et 4 M sans y dissoudre des aluminates. En revanche, il est intéressant de dissoudre dans cette solution des stannates en concentration comprise entre 0,01 et 0,1 M. Il est également intéressant de dissoudre dans cette solution une petite quantité d'un complexant du zinc, tel que le lignosulfonate de potassium.

Le zinc complexé par le composé précité se présente alors sous forme d'un ion plus volumineux que l'ion zincate réduisant ainsi son passage à travers la membrane anionique.

Concernant la membrane, des bons résultats ont été obtenus avec une membrane à conduction anionique.

La présente invention ne se limite pas à une membrane échangeuse d'ion et peut s'étendre à d'autres membranes, laissant passer les OH⁻, et constituant un filtre efficace vis-à-vis des zincates et éventuellement des aluminates.

En effet bien que la solubilité des zincates dans l'électrolyte soit rendue faible, elle n'est jamais nulle et, dans ces conditions, il convient d'éviter le transport des ions zincates dans l'électrolyte où est immergée l'électrode positive.

De plus, il est observé que la présence d'une concentration élevée en aluminates dans l'électrolyte (supérieure par exemple à 80 g/dm³ exprimé en aluminium) diminue, comme pour les zincates, la capacité restituable pour l'électrode positive.

La membrane doit donc empêcher le plus possible le passage des anions zincates et aluminates ; il est avantageux d'utiliser une membrane présentant une conduction anionique assurée par les anions OH⁻ pour au moins 90 % du courant la traversant.

Des résultats satisfaisants ont été obtenus avec des membranes à base de polyoxyéthylène ou de polyoxyméthylène modifié par des groupements échangeurs de type ammonium quaternaire.

Ainsi, selon la présente invention, on ne demande pas à la membrane, comme c'est le cas pour tous les modes de réalisation jusqu'alors publiés, de gêner la progression des dendrites de zinc, mais essentiellement de protéger l'électrode positive de nickel.

Cependant, une membrane n'étant jamais parfaitement sélective, on peut observer, malgré son emploi, la présence de zincates et éventuellement d'aluminates dans l'électrolyte où est placée l'électrode positive.

Afin de retarder le plus possible le moment où la concentration en anions zincates et aluminates devient gênante pour l'électrode de nickel, il est avantageux de disposer d'un volume excédentaire d'électrolyte dans le compartiment où se trouve l'électrode positive.

Ainsi, en plus du volume d'électrolyte nécessaire au mouillage de la porosité de l'électrode positive, on dispose d'une réserve constituée par l'imprégnation par l'électrolyte de séparateurs de haute porosité, par exemple fibreux, qui sont serrés entre l'électrode positive et la membrane échangeuse d'ions.

Toutefois, cette masse d'électrolyte ne peut pas être trop élevée, sous peine de diminuer exagérément les caractéristiques massiques du générateur ou/et d'entraîner des chutes ohmiques rédhibitoires lors de fonctionnements à fortes densités de courant.

Ainsi, de bons résultats sont obtenus avec trois ou quatre épaisseurs de séparateur VILEDON FS2119 qui permettent une rétention de l'ordre de 6 à 8 cm³ d'électrolyte par dm² d'électrode.

Dans un mode de réalisation particulier d'un accumulateur selon l'invention, l'électrolyte en contact avec l'électrode positive est essentiellement contenu dans la porosité de l'électrode positive et un ou des séparateurs retenant un volume d'électrolyte compris entre 3 et 8 cm³ par dm² de surface apparente.

Par ailleurs, afin d'assurer un bon fonctionnement de l'électrode de nickel, l'électrolyte utilisé est une solution de KOH à concentration comprise entre 4 et 8 M. On peut également, comme il est très généralement pratiqué, utiliser une solution de KOH comportant 1 M en LiOH.

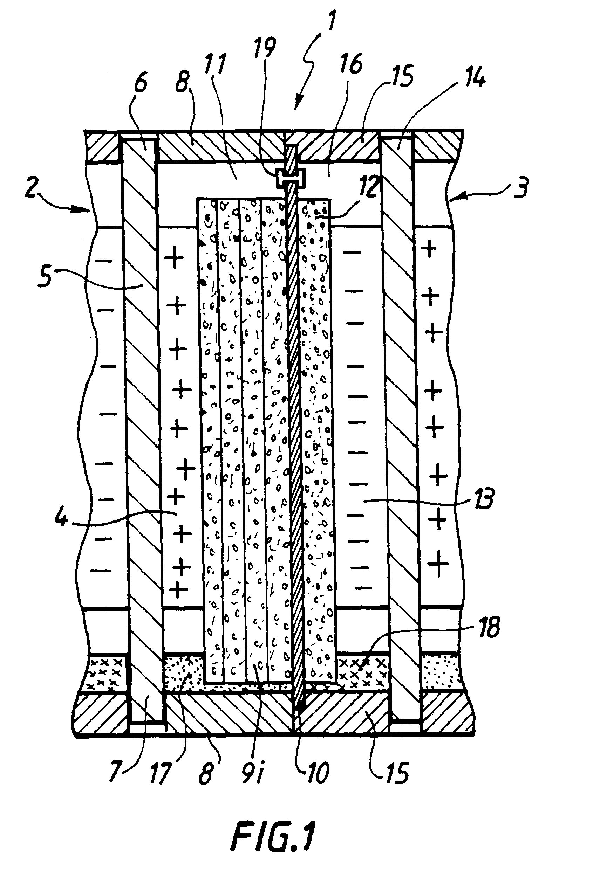

La figure 1 illustre, à titre d'exemple non limitatif, un module 1 caractéristique d'un empilement d'électrodes bipolaires 2 et 3 d'un accumulateur selon l'invention dont la description détaillée et les caractéristiques de chaque composant sont données ci-après.

Cette description est effectuée de la gauche vers la droite sur la figure 1.

Une électrode positive 4 est plaquée contre la face interne de l'écran bipolaire 5 de la première électrode bipolaire 2.

L'électrode 4 est constituée par une mousse de nickel empâtée par une masse active dont la composition est :
- matière active : Ni(OH)₂ sphérique, de densité 2, contenant 3 % Co et 6 % Cd ;
- additif : CoO, poudre de nickel ;
- liant PTFE (abréviation pour polytétrafluoréthylène).

Sa capacité surfacique est, en électrolyte libre, de 4 Ah/dm² mesurée par décharge au régime 0,2 C.

Son épaisseur est de 1 mm. Le volume d'électrolyte l'imprégnant est de 4,5 cm³/dm². La collecte de courant s'effectue par pression de l'électrode 4 sur l'écran bipolaire 5.

L'écran bipolaire 5 est maintenu par ses extrémités 6 et 7 au cadre 8 assurant l'étanchement du module 1.

Sur la face de l'électrode positive 4, opposée à la face en contact avec l'écran bipolaire 5, sont disposés quatre séparateurs 9i VILEDON FS 2119 imprégnés d'électrolyte. L'électrolyte est une solution de KOH de concentration 7,5 M. La surface apparente des séparateurs 9i est telle qu'ils débordent de 2 mm par rapport aux deux côtés verticaux de l'électrode positive 4. En revanche ce débordement est de 5 mm par rapport au côté inférieur de l'électrode positive.

Sur les séparateurs 9i, on dispose une membrane échangeuse d'ions 10, commercialisée sous la marque enregistrée NEOSEPTA AMH par la société TOKUYAMA SODA, dont trois des côtés (deux côtés verticaux + un côté inférieur) débordent par rapport à ceux des séparateurs 9i de telle façon que, sur une bande de largeur 5 mm, la membrane 10 soit pressée sur trois des côtés précités contre le cadre d'étanchement 8.

L'espace compris entre l'écran bipolaire 5 et la membrane 10 définit un compartiment positif 11.

De l'autre côté de la membrane 10, on dispose un séparateur 12 VILEDON FS 2119 imprégné d'électrolyte. Cet électrolyte est une solution de KOH de concentration 8 M dans lequel a été dissous 80 g d'aluminium/dm³. Ses dimensions sont les mêmes que celles des séparateurs 9i disposés du côté de l'électrode positive 4.

Une électrode négative 13 est empâtée sur une mousse de nickel ou de cuivre cadmiée ou plombée d'épaisseur initiale 2 mm. La face de l'électrode négative 13, opposée à celle en contact avec le séparateur 12, est pressée sur l'écran bipolaire 14 de la deuxième électrode bipolaire 3.

Les extrémités de l'écran bipolaire 14 sont maintenues par un deuxième cadre 15 ssurant l'étanchement du module 1 et le pincement de la membrane 10 contre le premier cadre 8.

L'espace compris entre l'écran bipolaire 14 et la membrane 10 définit un compartiment négatif 16.

La masse active de l'électrode négative 13 est constituée par :
- Matière active : ZnO 75 % ;
- Additif : CdO entre 2 et 12 % ;
- un liant comprenant 10 % de carboxyméthylcellulose et 3 % de PTFE.

L'électrode 13 est mouillée par l'électrolyte décrit précédemment (solution de KOH de concentration 8 M comprenant à l'état dissous 80 g/dm³ d'aluminium).

La surface apparente de l'électrode est de 1 dm² et a les mêmes dimensions que l'électrode positive 4. Sa décharge à 0,2 C montre que la capacité restituée est de 6 Ah.

Les écrans bipolaires 5 et 14 respectifs aux électrodes bipolaires 2 et 3 sont constitués par exemple d'un polymère rendu conducteur électroniquement par une charge de carbone.

Les écrans 5 et 14 ont une épaisseur de 0,2 mm. Ils sont nickelés sur leur face en contact respectivement avec l'électrode positive 4, et sur leur autre face respectivement en contact avec l'électrode négative 13, nickelés puis cadmiés.

Dans le mode de réalisation de la figure 1, on a représenté un accumulateur disposé verticalement.

Cette disposition permet de ménager des réserves d'électrolytes 17 et 18 respectivement dans le fond des compartiments positif et négatif 11 et 16.

S'agissant d'accumulateurs sans maintenance, il convient néanmoins que l'oxygène formé lors de la surcharge de l'électrode positive 4 puisse se recombiner avec une cinétique rapide sur l'électrode négative 13.

De même, les dégagements, même minimes, d'hydrogène sur l'électrode négative 13 sont peu gênants lorsque cet hydrogène peut être recombiné sur l'électrode positive 4.

Or une membrane échangeuse d'ions 10 dont l'étanchement a été réalisé sur tout son pourtour ne permet, malheureusement plus, le passage des gaz d'un compartiment vers l'autre.

Des solutions pour remédier à ce problème ont déjà été proposées telles que l'utilisation d'une membrane où coexistent des zones hydrophobes (permettant le passage des gaz) et hydrophiles (où s'effectue le passage des ions). Un tel composant est difficile à réaliser et on peut craindre que les régions frontières entre deux zones ne jouent le rôle attendu de barrière à tout transfert d'électrolyte.

Une autre solution consiste à créer dans le cadre d'étanchement des canaux permettant le passage des gaz à l'extérieur de la membrane. Un tel dispositif est difficile à réaliser et fragilise les cadres d'étanchement.

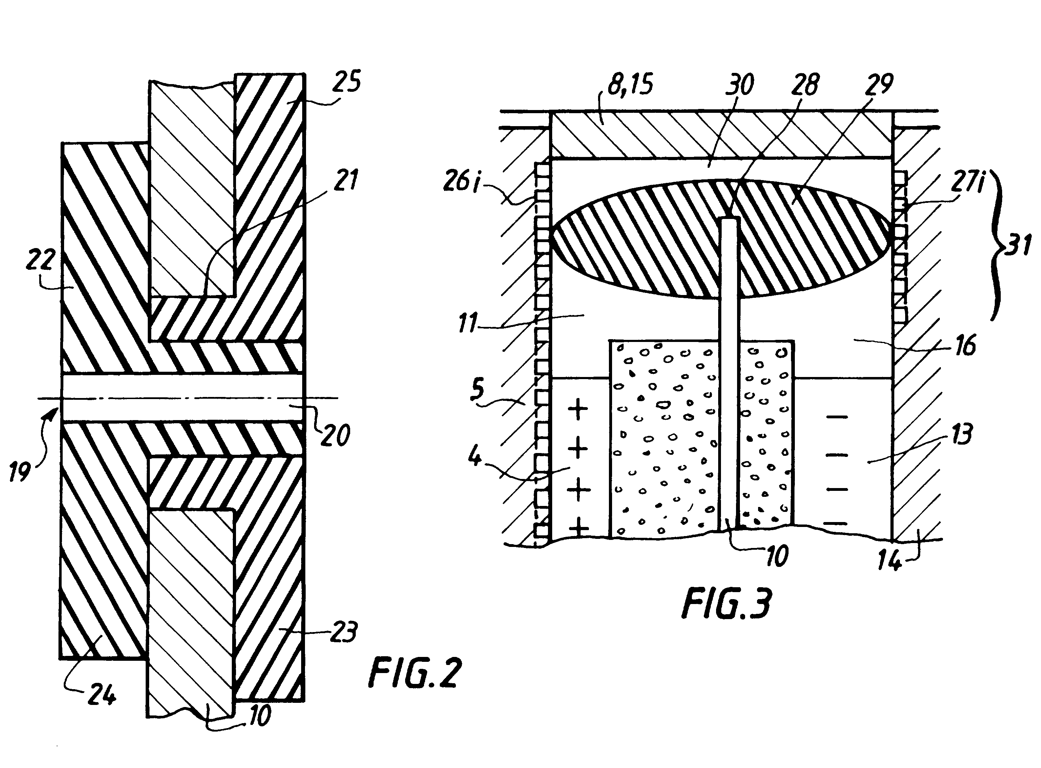

La figure 2 illustre un premier moyen 19 selon l'invention, permettant le passage des gaz tout en remédiant aux inconvénients précités.

Ce moyen de passage 19 est également représenté symboliquement à la figure 1.

Un orifice 20 est aménagée dans la membrane échangeuse d'ions d'épaisseur comprise entre 0,1 et 0,5 mm, et ceci dans une zone où elle n'est pas au contact des séparateurs 9i, 12 ou d'électrodes 4, 13, imbibées d'électrolyte, c'est à dire dans une zone marginale proche de la zone d'étanchement.

Afin d'éviter tout risque de passage de l'électrolyte par l'orifice 20, celui-ci a un diamètre compris entre 1 et 5 mm et ses parois auront une caractéristique nettement hydrophobe.

Pour obtenir cette caractéristique, on perce la membrane 10 de part en part d'un trou 21 de diamètre déterminé pour permettre l'assemblage d'un premier fourreau de PTFE 22 emmanché à force dans un deuxième fourreau 23.

Le diamètre intérieur du trou 21 percé dans la membrane 10 correspond au diamètre extérieur du deuxième fourreau 23 et le diamètre intérieur du premier fourreau 22 correspond au diamètre de l'orifice 20.

Les deux fourreaux 22 et 23 comportent respectivement deux collerettes 24 et 25 qui après emmanchement des deux fourreaux 22 et 23 viennent pincer la membrane 10.

L'épaisseur des collerettes 24 et 25 est inférieure à 0,8 mm.

Le nombre de ces passages 19 par élément est fonction de la capacité (Ah) de l'élément, donc, entre autres, de ses dimensions et du régime appliqué lors notamment des surcharges (intensité et durée).

Plusieurs modes de réalisations d'un moyen assurant à la fois le passage du gaz et la caractéristique hydrophobe de ce moyen, peuvent être adoptées.

Selon un deuxième moyen illustré par la figure 3 permettant le passage des gaz du compartiment positif 11 vers le compartiment négatif 16 ou vice versa, des rainures 26i, 27i sont aménagées sur les faces internes des écrans bipolaires 5, 14 et s'étendent au-delà de la surface occupée par la membrane échangeuse d'ions 10.

Pour sa face en contact avec l'électrode positive 4, l'écran 5 est rainuré suivant deux directions par exemple perpendiculaires sur toute sa surface à l'exclusion des zones marginales servant à l'étanchement par le cadre 8.

Une extrémité de la membrane 10 n'est pas reliée au cadre 8, 15 et est dite libre. Cette extrémité libre 28 est en regard des rainures 26i et 27i aménagées respectivement dans les écrans bipolaires 5 et 14.

Un élastomère 29 est surmoulé sur l'extrémité libre 28 de la membrane 10 et s'étend entre les deux écrans bipolaires 5 et 14 de part et d'autre de l'extrémité libre 28 de la membrane 10.

L'élastomère 29 vient fermer les premier et deuxième compartiments 11 et 16 et définit un espace intermédiaire 30 entre le cadre extérieur d'étanchement 8, 15 et les faces internes des écrans bipolaires 5 et 14.

L'oxygène peut donc être transporté via l'espace intermédiaire 30, délimité par le cadre d'étanchement 8, 15, les écrans bipolaires 5 et 14 rainurés, d'un compartiment 11 à l'autre 16.

En revanche, l'écran bipolaire 14, pour sa face en contact avec l'électrode de zinc 13, ne comporte des rainures 27i que dans une zone 31 s'étendant sensiblement entre le cadre 8, 15 et l'électrode de zinc 13. Les rainures peuvent s'étendre selon une ou plusieurs directions, permettant ainsi le passage des gaz de la zone intermédiaire 30 vers l'électrode de zinc 13 via la zone 31 précédente ou réciproquement.

Le passage des gaz 19 est donc défini par les rainures 26i et 27i et par l'espace intermédiaire 30.

## Revendications

1. Accumulateur alcalin, comportant au moins une électrode positive (4) et une électrode négative (13) de zinc en contact avec un électrolyte via au moins un séparateur (9i;12) imprégné d'électrolyte, serrées respectivement contre deux écrans bipolaires (5 et 14) maintenus par un cadre d'étanchement (8,15), caractérisé en ce que l'électrode positive (4) est en contact avec un premier électrolyte de volume et de composition déterminés via au moins un premier séparateur (9i), en ce que l'électrode négative (13) est en contact avec un deuxième électrolyte de volume et de composition déterminés différents du premier électrolyte via au moins un deuxième séparateur (12), et en ce que les premier et deuxième électrolytes sont séparés par une membrane (10) constituant un filtre vis-à-vis des zincates et éventuellement des aluminates, notamment une membrane à conduction anionique, définissant des premier et deuxième compartiments (11 et 16).

2. Accumulateur selon la revendication 1, caractérisé en ce que l'électrolyte en contact avec l'électrode négative (13) est essentiellement contenu dans la porosité de l'électrode négative (13) et le deuxième séparateur (12) retenant un volume d'électrolyte compris entre 2 et 3 cm³ par dm² de surface frontale.

3. Accumulateur selon la revendication 2, caractérisé en ce que l'électrolyte en contact avec l'électrode négative (13) est constitué par une solution aqueuse de KOH de concentration initiale comprise entre 4 et 8 M dans laquelle a été dissous entre 70 et 100 g d'aluminium.

4. Accumulateur selon la revendication 2, caractérisé en ce que l'électrolyte en contact avec l'électrode négative (13) est constitué par une solution de KOH de concentration comprise entre 3 et 4 M.

5. Accumulateur selon la revendication 4, caractérisé en ce que la solution de KOH de concentration comprise entre 3 et 4 M comprend, en outre, un complexant du zinc.

6. Accumulateur selon la revendication 5, caractérisé en ce que le complexant du zinc est un lignosulfonate.

7. Accumulateur selon la revendication 4, caractérisé en ce que la solution de KOH de concentration comprise entre 3 et 4 M comprend, en outre, des stanates en concentration comprise entre 0,01 et 0,1 M.

8. Accumulateur selon l'une quelconque des revendications 1 à 7, caractérisé en ce que l'électrode positive (4) est une électrode de Ni ou d'Ag.

9. Accumulateur selon la revendication 8, caractérisé en ce que l'électrolyte en contact avec l'électrode positive (4) est essentiellement contenu dans la porosité de l'électrode positive (4) et le premier séparateur (9i) retenant un volume d'électrolyte compris entre 3 et 8 cm³ par dm² de surface apparente.

10. Accumulateur selon la revendication 9, caractérisé en ce que l'électrolyte en contact avec l'électrode positive (4) est constitué par une solution de KOH de concentration comprise entre 4 et 8 M.

11. Accumulateur selon la revendication 9, caractérisé en ce que l'électrolyte en contact avec l'électrode positive (4) est constitué par une solution de KOH de concentration comprise entre 4 et 8 M comprenant 1 M de LiOH.

12. Accumulateur selon la revendication 1, caractérisé en ce que la membrane (10) a une conduction anionique donnée pour au moins 90 % du courant la traversant par des anions OH-.

13. Accumulateur selon la revendication 12, caractérisé en ce que la membrane (10) est à base de polyoxyéthylène ou de polyoxyméthylène modifié par des groupements échangeurs de type ammonium quaternaire.

14. Accumulateur selon la revendication 8, caractérisé en ce que la membrane (10) est munie, dans une partie libre, d'au moins un dispositif (19) permettant le passage des gaz dégagés par les électrodes (4 et 13) entre les premier et deuxième compartiments (11 et 16).

15. Accumulateur selon la revendication 14, caractérisé en ce que le dispositif (19) permettant le passage des gaz dégagés par les électrodes (4 et 13) entre les premier et deuxième compartiments (11 et 16) comporte un orifice hydrophobe formé par un premier et deuxième fourreaux (22 et 23) emmanchés à force l'un dans l'autre de part et d'autre de la membrane (10); le diamètre du trou du fourreau intérieur (22) définissant le diamètre de l'orifice (20).

16. Accumulateur selon la revendication 14, caractérisé en ce que le dispositif (19) permettant le passage des gaz dégagés par les électrodes (4 et 13) entre les premier et deuxième compartiments (11 et 16) comporte des rainures (26i et 27i) aménagées respectivement sur les faces des écrans bipolaires (5 et 14) sur lesquelles s'appuient les électrodes (4 et 13), et un polymère (29) fixé à l'extrémité libre (28) de la membrane (10), fermant les premier et deuxième compartiments (11 et 16) et définissant un espace intermédiaire (30) entre le cadre extérieur d'étanchement (8,15) et les écrans bipolaires (5, 14) ; le passage (19) entre les premier et deuxième compartiments (11 et 16) étant défini par les rainures (26i et 27i) et l'espace intermédiaire (30).

17. Accumulateur selon l'une quelconque des revendications 8 à 16, caractérisé en ce qu'il comporte des première et deuxième réserves (17 et 18) d'électrolyte respectivement dans les fonds des premier et deuxième compartiments (11 et 16); l'accumulateur étant dans une position d'utilisation verticale.

18. Accumulateur selon l'une quelconque des revendications 1 à 7, caractérisé en ce que l'électrode positive (4) est une électrode poreuse à gaz, alimentée par de l'oxygène ou de l'air.

## Claims

1. Alkaline storage battery, comprising at least one positive electrode (4) and a negative zinc electrode (13) in contact with an electrolyte via at least one electrolyte-impregnated separator (9i; 12), clamped against two respective bipolar screens (5 and 14) supported by a sealing frame (8, 15) characterised in that the positive electrode (4) is in contact with a first electrolyte having a predetermined volume and composition via at least one first separator (9i), in that the negative electrode (13) is in contact with a second electrolyte having a predetermined volume and composition different from those of the first electrolyte via at least one second separator (12), and in that the first and second electrolytes are separated by a membrane (10) forming a zincate and optionally aluminate filter, in particular an anionically conductive membrane defining first and second compartments (11 and 16).

2. Storage battery according to claim 1, characterised in that the electrolyte in contact with the negative electrode (13) is essentially contained in the porosity of negative electrode (13) and the second separator (12) holding a volume of electrolyte of between 2 and 3 cm³ per dm² of frontal surface.

3. Storage battery according to claim 2, characterised in that the electrolyte in contact with the negative electrode (13) is composed of an aqueous solution of KOH in an initial concentration of between 4 and 8 M in which is dissolved between 70 and 100 g of aluminium.

4. Storage battery according to claim 2, characterised in that the electrolyte in contact with the negative electrode (13) is composed of a solution of KOH in a concentration of between 3 and 4 M.

5. Storage battery according to claim 4, characterised in that the solution of KOH in a concentration of between 3 and 4 M also comprises a zinc sequestering agent.

6. Storage battery according to claim 5, characterised in that the zinc sequestering agent is a lignosulphonate.

7. Storage battery according to claim 4, characterised in that the solution of KOH in a concentration of between 3 and 4 M also comprises stannates in a concentration of between 0.01 and 0.1 M.

8. Storage battery according to any of claims 1 to 7, characterised in that the positive electrode (4) is an electrode of Ni or of Ag.

9. Storage battery according to claim 8, characterised in that the electrolyte in contact with the positive electrode (4) is essentially contained in the porosity of positive electrode (4) and first separator (9i) holding a volume of electrolyte of between 3 and 8 cm³ per dm² of apparent surface.

10. Storage battery according to claim 9, characterised in that the electrolyte in contact with the positive electrode (4) is composed of a solution of KOH in a concentration of between 4 and 8 M.

11. Storage battery according to claim 9, characterised in that the electrolyte in contact with the positive electrode (4) is composed of a solution of KOH in a concentration of between 4 and 8 M comprising 1 M of LiOH.

12. Storage battery according to claim 1, characterised in that the membrane (10) has a given anionic conductivity for at least 90% of the through-current of OH⁻ anions.

13. Storage battery according to claim 12, characterised in that the membrane (10) is based on polyoxyethylene or polyoxymethylene modified by exchange groupings of the quaternary ammonium type.

14. Storage battery according to claim 8, characterised in that membrane (10) is provided, in a free part, with at least one device (19) allowing the passage of gases released by the electrodes (4 and 13) between the first and second compartments (11 and 16).

15. Storage battery according to claim 14, characterised in that the device (19) allowing the passage of gases released by the electrodes (4 and 13) between the first and second compartments (11 and 16) comprises a hydrophobic orifice formed by a first and second sleeve (22 and 23) force fitted one inside the other on both sides of the membrane (10); the diameter of the hole in the interior sleeve (22) defining the diameter of the orifice (20).

16. Storage battery according to claim 14, characterised in that the device (19) allowing the passage of gases released by the electrodes (4 and 13) between the first and second compartments (11 and 16) comprises grooves (26i and 27i) arranged respectively on the faces of bipolar screens (5 and 14) on which are supported the electrodes (4 and 13), and a polymer (29) fixed at the free end (28) of the membrane (10), closing the first and second compartments (11 and 16) and defining an intermediate space (30) between ) the external sealing frame (8, 15) and the bipolar screens (5, 14) ; the passage (19) between the first and second compartments (11 and 16) being defined by the grooves (26i and 27i) and the intermediate space (30).

17. Storage battery according to any one of claims 8 to 16, characterised in that it comprises first and second reserves (17 and 18) of electrolyte respectively in the bottoms of the first and second compartments (11 and 16); the storage battery being in a vertical position in use.

18. Storage battery according to any one of claims 1 to 7, characterised in that the positive electrode (4) is an electrode porous to gas, fed by oxygen or air.

## Patentansprüche

1. Alkalischer Akkumulator mit zumindest einer positiven Elektrode (4) und einer negativen Elektrode (13) aus Zink, die über zumindest einen elektrolytgetränkten Separator (9i; 12) mit einem Elektrolyten in Berührung stehen und gegen je eine von zwei durch einen Dichtungsrahmen (8, 15) gehaltenen bipolaren Schirmwänden (5 und 14) gepresst werden, dadurch gekennzeichnet, dass die positive Elektrode (4) mit einem ersten Elektrolyten in Berührung steht, dessen Volumen und Zusammensetzung über mindestens einen ersten Separator (9i) festgelegt werden, dadurch, dass die negative Elektrode (13) mit einem zweiten Elektrolyten in Berührung steht, dessen Volumen und Zusammensetzung über zumindest einen zweiten Separator (12) vom ersten Elektrolyten unterschiedlich festgelegt werden, und dadurch, dass der erste und zweite Elektrolyt durch eine Membran (10) getrennt sind, die gegenüber Zinkaten und gegebenenfalls Aluminaten ein Filter darstellt, namentlich eine anionenleitende Membran, durch die ein erster und ein zweiter Raum (11 und 16) definiert werden.

2. Akkumulator nach Anspruch 1, dadurch gekennzeichnet, dass der Elektrolyt in Berührung mit der negativen Elektrode (13) im wesentlichen im Porenraum der negativen Elektrode (13) enthalten ist und der zweite Separator (12) ein Elektrolytvolumen zwischen zwei und 3 cm³ pro dm² Seitenfläche zurückhält.

3. Akkumulator nach Anspruch 2, dadurch gekennzeichnet, dass der Elektrolyt in Berührung mit der negativen Elektrode (13) aus einer wässrigen KOH-Lösung einer anfänglichen Konzentration zwischen 4 und 8 M besteht, in der zwischen 70 und 100 g Aluminium aufgelöst sind.

4. Akkumulator nach Anspruch 2, dadurch gekennzeichnet, dass der Elektrolyt in Berührung mit der negativen Elektrode (3) aus einer KOH-Lösung einer Konzentration zwischen 3 und 4 M besteht.

5. Akkumulator nach Anspruch 4, dadurch gekennzeichnet, dass die KOH-Lösung der zwischen 3 und 4 M liegenden Konzentration ausserdem einen Komplexbildner für Zink umfasst.

6. Akkumulator nach Anspruch 5, dadurch gekennzeichnet, dass der Komplexbildner für Zink ein Ligninsulfonat ist.

7. Akkumulator nach Anspruch 4, dadurch gekennzeichnet, dass die KOH-Lösung der zwischen 3 und 4 M liegenden Konzentration ausserdem Stannate in einer Konzentration von 0,01 bis 0,1 M umfasst.

8. Akkumulator nach einem beliebigen der Ansprüche 1 bis 7, dadurch gekennzeichnet, dass die positive Elektrode (4) eine Ni- oder Ag-Elektrode ist.

9. Akkumulator nach Anspruch 8, dadurch gekennzeichnet, dass der Elektrolyt in Berührung mit der positiven Elektrode (4) im wesentlichen im Porenraum der positiven Elektrode (4) enthalten ist und der erste Separator (9i) ein Elektrolytvolumen zwischen 3 und 8 cm³ pro dm² seiner scheinbaren Oberfläche zurückhält.

10. Akkumulator nach Anspruch 9, dadurch gekennzeichnet, dass der Elektrolyt in Berührung mit der positiven Elektrode (4) aus einer KOH-Lösung einer zwischen 4 und 8 M liegenden Konzentration besteht.

11. Akkumulator nach Anspruch 9, dadurch gekennzeichnet, dass der Elektrolyt in Berührung mit der positiven Elektrode (4) aus einer KOH-Lösung einer Konzentration zwischen 4 und 8 M mit 1 M LiOH besteht.

12. Akkumulator nach Anspruch 1, dadurch gekennzeichnet, dass die Membran (10) eine für zumindest 90 % des durch sie fliessenden Stromes durch OH⁻-Anionen gegebene anionische Leitfähigkeit hat.

13. Akkumulator nach Anspruch 12, dadurch gekennzeichnet, dass die Membran (10) eine Membran auf der Basis von durch Austauschergruppen vom Typ des quaternären Ammoniums modifiziertem Polyoxyethylen oder Polyoxymethylen ist.

14. Akkumulator nach Anspruch 8, dadurch gekennzeichnet, dass die Membran (10) in einem freien Abschnitt mit zumindest einer Vorrichtung (19) ausgestattet ist, die den Übergang von durch die Elektroden (4 und 13) freigesetzten Gasen zwischen dem ersten und zweiten Raum (11 und 16) gestattet.

15. Akkumulator nach Anspruch 14, dadurch gekennzeichnet, dass die Vorrichtung (19), die den Übergang von durch die Elektroden (4 und 13) freigesetzten Gasen zwischen dem ersten und zweiten Raum (11 und 16) gestattet, ein wasserabstossendes Loch umfasst, das durch eine erste und zweite Buchse (22 und 23) gebildet wird, die von beiden Seiten der Membran (10) ineinandergedrückt worden sind; wobei der Durchmesser des Loches der inneren Buchse (22) den Durchmesser des Loches (20) definiert.

16. Akkumulator nach Anspruch 14, dadurch gekennzeichnet, dass die Vorrichtung (19), die den Übergang von durch die Elektroden (4 und 13) freigesetzten Gasen zwischen dem ersten und zweiten Raum (11 und 16) gestattet, Rillen (26i und 27i) umfasst, die jeweils in die Seitenflächen der bipolaren Schirmwände (5 und 14) eingearbeitet worden sind, an die sich die Elektroden (4 und 13) anschmiegen, sowie ein Polymer (29), das am freien Ende (28) der Membran (10) befestigt ist, den ersten und zweiten Raum (11 und 16) abschliesst und einen Übergangsraum (30) zwischen dem äusseren Dichtungsrahmen (8, 15) und den bipolaren Schirmwänden (5, 14) definiert; wobei der Übergang (19) zwischen dem ersten und zweiten Raum (11 und 16) von den Rillen (26i und 27i) und dem Übergangsraum (30) definiert wird.

17. Akkumulator nach einem beliebigen der Ansprüche 8 bis 16, dadurch gekennzeichnet, dass er eine erste und zweite Elektrolytreserve (17 und 18) im Boden des ersten bzw. zweiten Raumes (11 und 16) umfasst; wobei der Akkumulator sich in einer senkrechten Gebrauchsstellung befindet.

18. Akkumulator nach einem beliebigen der Ansprüche 1 bis 7, dadurch gekennzeichnet, dass die positive Elektrode (4) eine durch Sauerstoff oder Luft versorgte poröse Gaselektrode ist.
